# DEMANDE DE BREVET EUROPEEN

(11) **EP 1 818 571 A2**
(43) Date de publication de la demande: **15.08.2007**
(21) Numéro de dépôt: 07300766.8
(22) Date de dépôt: 02.02.2007
(51) Int. Cl.: F16H 59/20, F16H 61/28, F16D 48/06

(54) **Dispositif de positionnement d'actionneur de commande d'une boîte de vitesses mécanique pilotée pour un véhicule automobile ainsi que véhicule automobile comportant un tel dispositif**

(30) Priorité: 14.02.2006 FR 0650522
(71) Demandeur: Peugeot Citroën Automobiles S.A., 78140 Vélizy Villacoublay (FR)
(72) Inventeur: Valaix, Patrick, 92360 Meudon la Forêt (FR)

(57) **Abrégé**

La présente invention concerne un dispositif de positionnement d'actionneurs de commande d'une boîte de vitesses mécanique pilotée pour un véhicule automobile, qui comprend des moyens électroniques permettant de recevoir un signal électrique représentatif d'une situation de conduite à venir et d'engendrer, suite à la réception d'un tel signal électrique, des signaux de commande pour positionner l'actionneur d'embrayage en effort sur la butée et l'actionneur de la boîte de vitesses en une position mettant la bague de crabotage en effort sur les dents de l'anti-lâché.

## Description

La présente invention concerne un dispositif de positionnement d'actionneur de commande d'une boîte de vitesses mécanique pilotée pour un véhicule automobile, ainsi qu'un véhicule automobile comportant un tel dispositif.

Lors de la conduite d'un véhicule automobile, il y a des situations de conduite lors desquelles, ou en vue desquelles, le conducteur du véhicule automobile doit accélérer le véhicule assez subitement, ou pour le moins, le conducteur souhaite pouvoir le faire. Une telle situation de conduite est par exemple le dépassement d'un autre véhicule.

Afin d'obtenir l'accélération souhaitée, il est souvent nécessaire de rétrograder la boîte de vitesses. Lorsque le véhicule automobile est équipé d'une boîte de vitesses mécanique pilotée, le rétrogradage sur initiative du conducteur du véhicule automobile est généralement obtenu par appui sur la pédale d'accélérateur, une action connue aussi sous le vocable anglo-saxon « Kick Down ».

Toutefois, cette action prend un délai non négligeable, au moins vu du conducteur qui attend l'accélération instantanée à ce moment-là.

Il serait donc souhaitable de pouvoir minimiser le temps de réaction de la boîte de vitesses.

Le document EP-B-0 354 901 propose à cet effet d'exploiter l'actionnement du clignotant. En effet, lorsqu'un conducteur veut dépasser un véhicule qui se trouve devant lui, il s'agit de le faire assez vite, notamment lorsque cette situation de conduite se présente sur une route nationale ou une autre route avec circulation dans les deux sens. Le conducteur va alors guetter le moment propice pour pouvoir accélérer, changer de voie, dépasser l'autre véhicule et de se rabattre sur la voie initiale. En préparation de cette action de dépassement, le conducteur va actionner le clignotant pour avertir le ou les véhicules qui se trouveraient devant ou derrière lui de son intention de dépassement. Cet actionnement du clignotant est alors exploité par le dispositif décrit dans le document EP-B-0 354 901 pour empêcher la boîte de vitesses pilotée ou automatique de changer dans un rapport supérieur. Selon une variante de réalisation proposée dans ledit document, l'actionnement du clignotant peut également être exploité pour changer le mode de fonctionnement de la boîte de vitesses d'un mode confortable ou économique vers un mode sportif.

Toutefois, toutes ces mesures proposées ne permettent pas de réduire, voire de minimiser le temps nécessaire pour les éléments mécaniques de la boîte de vitesses mécanique pilotée ou automatique de changer de rapport de vitesses engagé dans un rapport inférieur.

Aussi, le but de l'invention est d'apporter une solution aux inconvénients exposés ci-avant qui permette de prendre en compte l'intention du conducteur au vu d'une situation de conduite à venir.

Le but de l'invention est atteint avec un dispositif de positionnement d'actionneurs de commande d'une boîte de vitesses mécanique pilotée pour un véhicule automobile, qui comprend des moyens électroniques permettant de recevoir un signal électrique représentatif d'une situation de conduite à venir et d'engendrer, suite à la réception d'un tel signal électrique, des signaux de commande pour positionner l'actionneur d'embrayage en effort sur la butée et l'actionneur de la boîte de vitesses en une position mettant la bague de crabotage en effort sur les dents de l'anti-lâché.

Grâce aux dispositions de l'invention, une situation de conduite nécessitant un changement du rapport de vitesses, est anticipée grâce à la détection de l'intention du conducteur qui se prépare à cette situation de conduite à venir. Dans l'exemple du dépassement d'un autre véhicule, l'actionnement du clignotant est exploité comme indicateur de l'intention du conducteur. Une autre situation de conduite à venir à laquelle un conducteur se prépare en actionnant le clignotant est par exemple l'approche à un carrefour où le véhicule doit tourner à droite ou à gauche et où l'actionnement du clignotant correspondant est exploité comme indicateur de l'intention du conducteur.

D'un autre côté, l'intention du conducteur en vu d'une situation de conduite à venir peut également se manifester par le biais d'un changement de la position du volant du véhicule. En effet, il est concevable qu'un conducteur préparant une manoeuvre de dépassement se mette le plus possible vers la limite gauche de la voie sur laquelle il roule afin de voir le mieux possible la circulation arrivant en face.

Lorsque le véhicule automobile est équipé d'un réseau multiplexé ou autre pour gérer les différentes fonctions du moteur et des autres organes du véhicule automobile, y compris d'un système de correction de trajectoire du type « ESP », les informations nécessaires telles que l'actionnement d'un clignotant droite ou gauche, ou le changement de la position du volant sont disponibles. Dans le cas contraire, un câblage supplémentaire permet la réception et l'exploitation des signaux électriques ou électroniques correspondants.

Conformément à l'invention, la détection de l'intention du conducteur du véhicule est utilisée pour préparer l'embrayage et les moyens nécessaires pour effectuer un changement du rapport de vitesses dès l'actionnement de ces organes. Ainsi, la détection de l'intention du conducteur est utilisée pour positionner l'actionneur d'embrayage en effort sur la butée. L'effort est déterminé par la valeur du couple transmis par le moteur et la limite de glissement de la garniture de l'embrayage.

De manière analogue, et simultanément, la détection de l'intention du conducteur est utilisée pour positionner l'actionneur de la boîte de vitesses afin de mettre la bague de crabotage en effort sur les dents de l'anti-lâché ou sur d'autres moyens appropriés selon la conception précise de la boîte de vitesses.

Ainsi, lorsque les moyens de pilotage de la boîte de vitesses mécanique détecte la demande de changement de vitesses, par exemple la demande de rétrogradage par le biais de la position de la pédale d'accélérateur, cette demande est réalisée très rapidement, puisque l'embrayage est déjà prêt à se décoller et que le rapport de vitesses est déjà prêt à se dégager pour synchronisation et crabotage sur le rapport cible.

Le nouveau rapport de vitesses peut ainsi être engagé plus rapidement que dans une boîte de vitesses mécanique pilotée non équipée du dispositif de l'invention.

Lorsque le changement de rapport de vitesse est effectué, les deux actionneurs reviennent dans leur position initiale en attendant un nouveau changement de l'état du clignotant.

Selon différents modes de réalisation du dispositif de l'invention, celui-ci peut également comprendre l'une au moins des caractéristiques ci-après, considérées isolément ou selon toutes combinaisons techniquement possibles :
- le dispositif comprend des moyens permettant de vérifier la durée du signal électrique et d'engendrer les signaux de commande pour positionner les deux actionneurs seulement lorsque la durée du signal électrique représentatif d'une situation de conduite à venir dépasse une durée prédéterminée ;
- le dispositif comprend des moyens permettant d'engendrer un signal de commande pour retirer les deux actionneurs de leur position d'effort lorsqu'un changement de rapport a été effectué ou lorsque aucun changement de vitesse n'a été effectué dans un laps de temps prédéterminé depuis le positionnement en effort des deux actionneurs ;
- le dispositif comprend des moyens électroniques permettant de recevoir un signal électrique représentatif d'une manoeuvre effectuée du véhicule automobile et d'engendrer, suite à la réception d'un tel signal électrique, des signaux de commande pour retirer les deux actionneurs de leur position d'effort ;
- le dispositif comprend un moyen de commande permettant d'engendrer un signal de commande de longue durée se superposant au signal électrique représentatif d'une situation de conduite à venir et permettant de maintenir les deux actionneurs en effort pendant la durée du signal de commande de longue durée.

La caractéristique supplémentaire citée en dernier ouvre la voie à une utilisation particulière du dispositif de l'invention. En effet, initialement le dispositif de l'invention est prévu pour prépositionner les actionneurs de commande de l'embrayage et de changement de vitesses dans la boîte de vitesses pour pouvoir rétrograder plus rapidement. Toutefois, il est également concevable, sans sortir du principe de la présente invention, de rendre le mode sportif de fonctionnement d'une boîte de vitesses encore plus sportif, c'est-à-dire obtenir une réaction encore plus rapide des organes de la boîte de vitesses, lorsque le conducteur veut changer de rapport de vitesses, en utilisant un dispositif de positionnement selon l'invention.

## Revendications

**1.** Dispositif de positionnement d'actionneurs de commande d'une boîte de vitesses mécanique pilotée pour un véhicule automobile,
**caractérisé en ce qu'**il comprend des moyens électroniques permettant de recevoir un signal électrique représentatif d'une situation de conduite à venir et d'engendrer, suite à la réception d'un tel signal électrique, des signaux de commande pour positionner l'actionneur d'embrayage en effort sur la butée et l'actionneur de la boîte de vitesses en une position mettant la bague de crabotage en effort sur les dents de l'anti-lâché.

**2.** Dispositif de positionnement selon la revendication 1, **caractérisé en ce qu'**il comprend des moyens permettant de vérifier la durée du signal électrique et d'engendrer les signaux de commande pour positionner les deux actionneurs seulement lorsque la durée du signal électrique représentatif d'une situation de conduite à venir dépasse une durée prédéterminée.

**3.** Dispositif de positionnement selon la revendication 1 ou 2, **caractérisé en ce qu'**il comprend des moyens permettant d'engendrer un signal de commande pour retirer les deux actionneurs de leur position d'effort lorsqu'un changement de rapport a été effectué ou lorsque aucun changement de vitesse n'a été effectué dans un laps de temps prédéterminé depuis le positionnement en effort des deux actionneurs.

**4.** Dispositif de positionnement selon la revendication 1 ou 2, **caractérisé en ce qu'**il comprend des moyens électroniques permettant de recevoir un signal électrique représentatif d'une manoeuvre effectuée du véhicule automobile et d'engendrer, suite à la réception d'un tel signal électrique, des signaux de commande pour retirer les deux actionneurs de leur position d'effort.

**5.** Dispositif de positionnement selon la revendication 1 ou 2, **caractérisé en ce qu'**il comprend un moyen de commande permettant d'engendrer un signal de commande de longue durée se superposant au signal électrique représentatif d'une situation de conduite à venir et permettant de maintenir les deux actionneurs en effort pendant la durée du signal de commande de longue durée.

**7.** Véhicule automobile, **caractérisé en ce qu'**il comprend un dispositif de positionnement selon l'une quelconque des revendications 1 à 6.
